# EUROPEAN PATENT APPLICATION

(11) **EP 4 821 640 A1**
(43) Date of publication of application: **14.10.2026**
(21) Application number: 26170291.4
(22) Date of filing: 01.04.2026
(51) Int. Cl.: B25J 9/00, B25J 9/04, B25J 9/10

(54) **ROBOT**

(30) Priority: 09.04.2025 JP 2025064297
(71) Applicant: Seiko Epson Corporation, Tokyo 160-8801 (JP)
(72) Inventor: SAKAMACHI, Junki, Suwa-shi, Nagano 392-8502 (JP)
(74) Representative: MERH-IP Matias Erny Reichl Hoffmann Patentanwälte PartG mbB

(57) **Abstract**

A robot includes a base having a housing, a first arm configured to rotate about a first axis with respect to the base, a second arm configured to rotate about a second axis with respect to the first arm, a first motor provided in the housing and configured to generate power for rotating the first arm with respect to the base, a speed reducer provided in the housing and configured to reduce a rotational speed of the first motor, and a second motor configured to generate power for rotating the second arm with respect to the first arm, in which the housing includes a bottom plate portion provided with a first through hole, part of the speed reducer is disposed in the first through hole, and the first arm includes a first arm base that extends in a direction orthogonal to the first axis, and an accommodating portion that protrudes downward from the first arm base, accommodates the second motor, and is spaced apart from the second arm.

## Description

The present application is based on, and claims priority from JP Application Serial Number 2025-064297, filed April 9, 2025, the disclosure of which is hereby incorporated by reference herein in its entirety.

### BACKGROUND

### 1. Technical Field

The present disclosure relates to a robot.

### 2. Related Art

JP-A-2016-140921 discloses a ceiling-suspended type robot. The robot includes a base, a first arm which is provided below the base and is rotatable with respect to the base, a second arm which is provided below the first arm and is rotatable with respect to the first arm, and a shaft which is provided in the second arm and is rotatable and movable upward and downward. In the ceiling-suspended robot, in order to prevent interference between the first arm and the base and interference between the first arm and a support such as a ceiling when rotating the first arm with respect to the base, it is known that the first arm is disposed so as to be spaced downward from the base.

However, as the distance between the first arm and the base increases, the second arm is disposed downward, and a lower end portion of the shaft provided in the second arm approaches an object such as a workpiece or a floor disposed below the shaft. As a result, there may be a case where the shaft can be moved upward and downward only by a length shorter than a maximum stroke length over which the shaft is originally movable upward and downward, and thus the maximum stroke length by which the shaft is movable upward and downward cannot be sufficiently utilized.

### SUMMARY

A robot according to an application example of the present disclosure includes a base having a housing, a first arm provided below the base and configured to rotate about a first axis with respect to the base, a second arm provided below the first arm and configured to rotate about a second axis parallel to the first axis with respect to the first arm, a shaft provided at a tip end portion of the second arm and configured to move upward and downward along a third axis parallel to the second axis, a first motor provided in the housing and configured to generate power for rotating the first arm with respect to the base, a speed reducer provided in the housing, configured to reduce a rotational speed of the first motor, and configured to transmit the power to the first arm, a second motor configured to generate power for rotating the second arm with respect to the first arm, and a third motor configured to generate power for moving the shaft upward and downward, in which the housing includes a bottom plate portion provided with a first through hole extending along the first axis, part of the speed reducer is disposed in the first through hole, and the first arm includes a first arm base that extends in a direction orthogonal to the first axis, and an accommodating portion that protrudes downward from the first arm base, accommodates the second motor, and is spaced apart from the second arm.

### BRIEF DESCRIPTION OF THE DRAWINGS

FIG. 1 is a side view showing a robot system including a robot according to an embodiment of the present disclosure.
FIG. 2 is a sectional view of a base of the robot shown in FIG. 1.
FIG. 3 is a sectional view taken along line III-III of FIG. 1.
FIG. 4 is a sectional view taken along line IV-IV of FIG. 1.
FIG. 5 is a sectional view taken along line V-V of FIG. 1.
FIG. 6 is a side view showing the maximum stroke length of a shaft.

### DESCRIPTION OF EMBODIMENTS

Hereinafter, an embodiment of the present disclosure will be described with reference to the drawings. The following description does not limit the technical range or the meaning of the terms described in the claims. In addition, the dimensional ratios of the drawings are exaggerated for convenience of description and may be different from the actual ratios. In the embodiment of the present disclosure, unless otherwise specifically stated and limited, terms such as "coupled" and "fixed" should be understood in a broad sense. For example, "fixed" includes fixed coupling, detachable coupling, or being integral, and may be mechanical coupling or electrical coupling, may be direct coupling or indirect coupling via another member, and, unless otherwise explicitly limited, may be internal coupling between two elements or interaction between two elements. A person skilled in the art can understand specific meanings of the above terms in the embodiment of the present disclosure according to particular circumstances.

A robot 10 according to an embodiment of the present disclosure will be described.

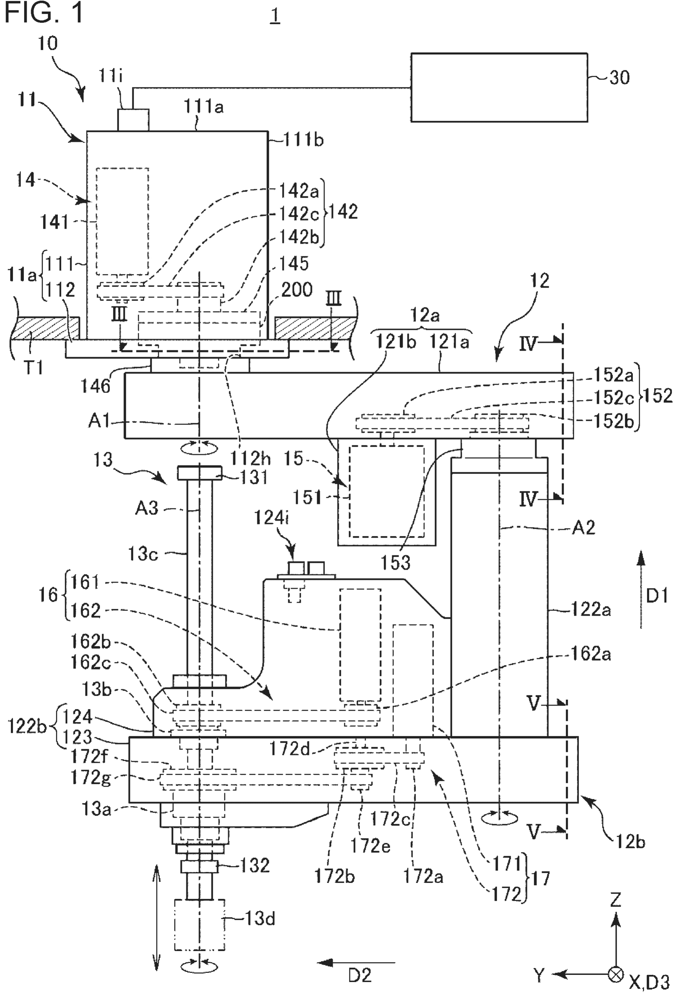

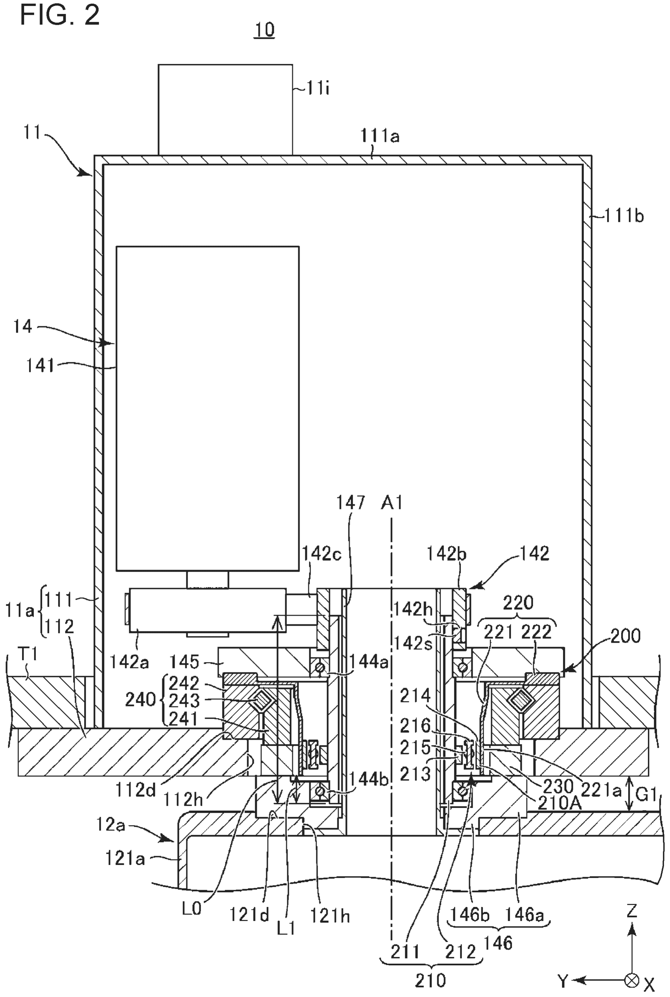

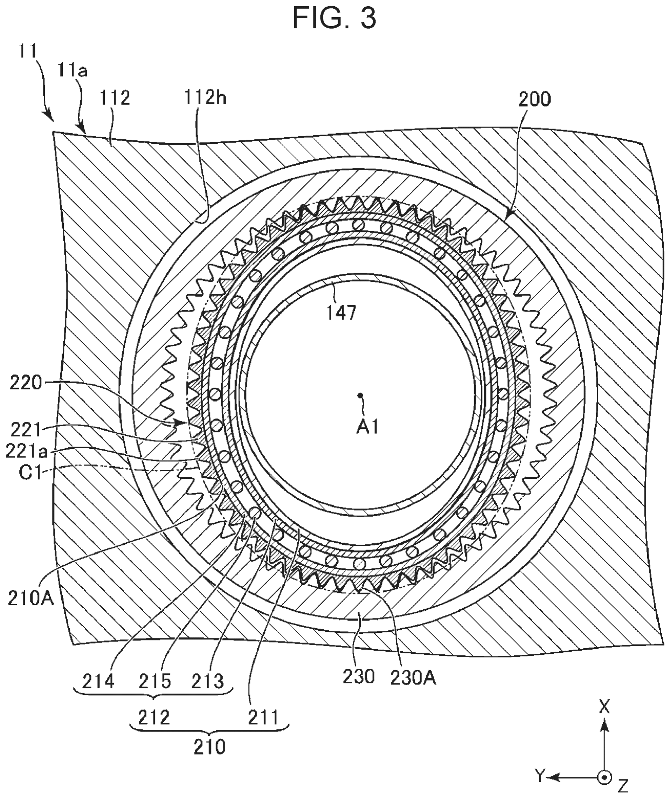

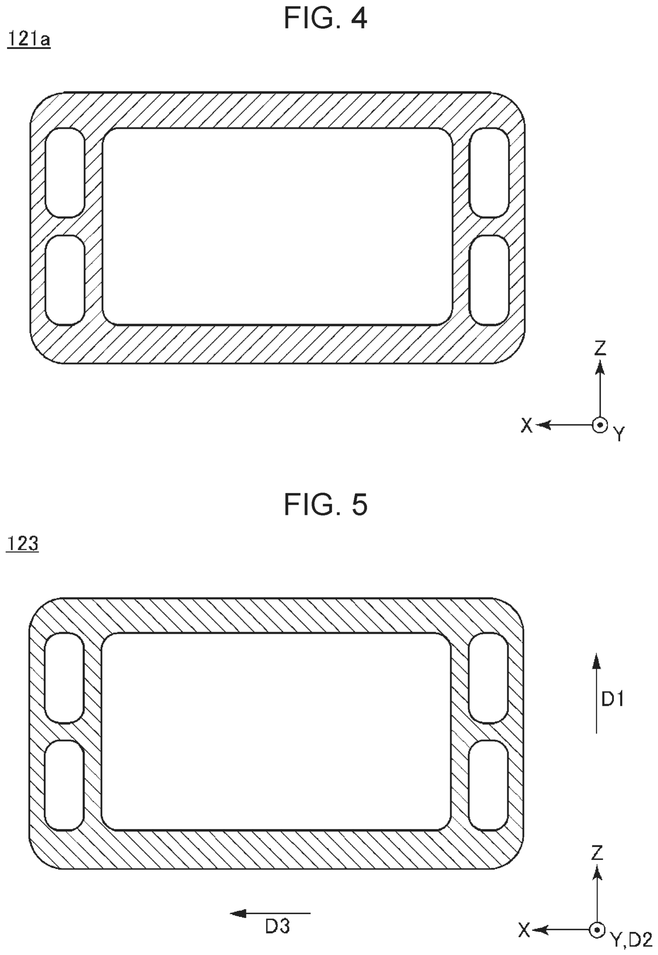

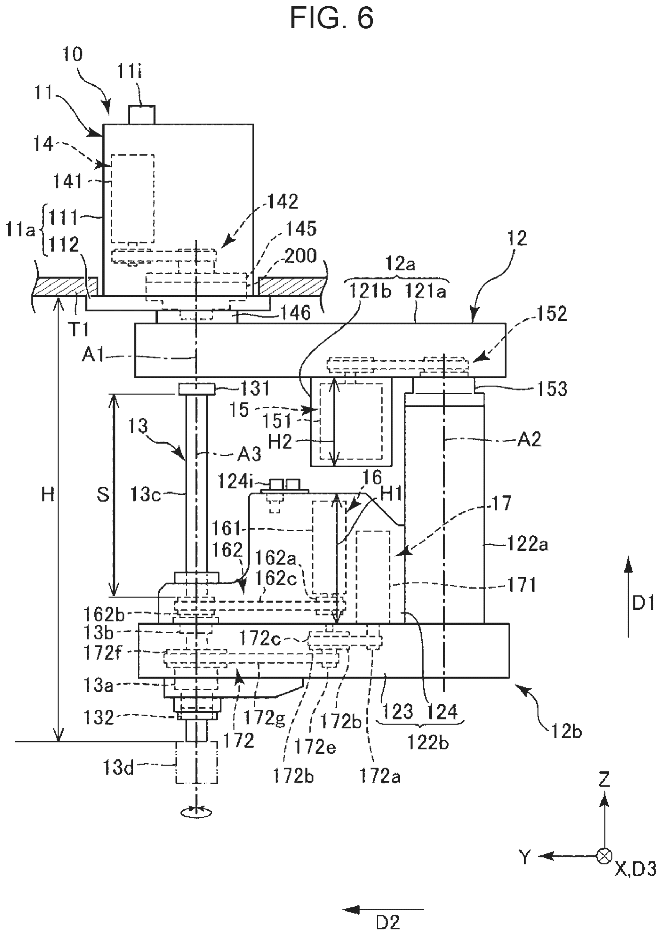

FIG. 1 is a side view showing a robot system 1 including a robot 10 according to the present embodiment. FIG. 2 is a sectional view of a base 11 included in the robot 10 shown in FIG. 1. FIG. 3 is a sectional view taken along line III-III of FIG. 1. FIG. 4 is a sectional view taken along line IV-IV of FIG. 1. FIG. 5 is a sectional view taken along line V-V of FIG. 1. FIG. 6 is a side view showing a maximum stroke length S of a shaft 13c. In FIG. 2, some elements of the robot 10 are shown in side view. In FIG. 3, a cage 216 of a bearing 212, which will be described later, is not shown.

Although details will be described later, as shown in FIG. 1, the base 11, a first arm 12a, a second arm 12b, the shaft 13c, and an end effector 13d of the robot 10 are sequentially coupled in this order. Hereinafter, in these coupling paths, a side on the base 11 is referred to as a "base end side" or a "base end portion", and an opposite side is referred to as a "tip end side" or a "tip end portion".

In addition, in each drawing, an X-axis, a Y-axis, and a Z-axis are set as three axes orthogonal to each other with respect to a work space of the robot 10. Each axis is represented by an arrow, with the tip end side of the arrow being the "+ side" and the base end side of the arrow being the "- side". In the following description, for example, an "X-axis direction" includes both the positive direction and the negative direction of the X-axis. The same applies to a Y-axis direction and a Z-axis direction.

In each of the drawings, a direction parallel to a third axis A3, which is a vertical movement axis of the shaft 13c described later, is defined as a Z-axis direction. Among the Z-axis directions, a direction in which a tip end portion of the shaft 13c to which the end effector 13d is attached approaches the second arm 12b (a Z-axis direction + side) is referred to as "upward", "upper direction", or "upper side", and an opposite direction thereof (a Z-axis direction - side) is referred to as "downward", "lower direction", or "lower side". Further, movement of the shaft 13c toward the Z-axis direction + side is referred to as "upward movement", movement toward the Z-axis direction - side is referred to as "downward movement", and movement in the Z-axis direction is referred to as "movement upward and downward". Further, an "upper end portion" of an object means a portion including a predetermined range extending downward from an uppermost end of the object, and a "lower end portion" of an object means a portion including a predetermined range extending upward from a lowermost end of the object. In the present embodiment, the Z-axis direction is parallel to a vertical direction. However, the Z-axis direction is not necessarily parallel to the vertical direction, and may be inclined with respect to the vertical direction.

In this specification, the term "parallel" includes not only a case where two objects are strictly parallel to each other, but also a case where, from a state in which the two objects are strictly parallel to each other, for example, one of the objects is inclined within ±10°, that is, a case where the two objects are substantially parallel. In this specification, the term "orthogonal" includes not only a case where two objects are strictly orthogonal to each other, but also a case where, from a state in which the two objects are strictly orthogonal to each other, for example, one of the objects is inclined within ±10°, that is, a case where the two objects are substantially orthogonal.

The robot system 1 according to the present embodiment includes, as outlined with reference to FIG. 1, the robot 10 and a control device 30 that controls driving of respective portions of the robot 10.

The robot 10 is a ceiling-suspended horizontal articulated robot (SCARA robot). For example, the robot 10 is used in work such as holding, transporting, assembling, processing, coating, and inspecting a workpiece such as an electronic component. However, the applications and types of work of the robot 10 are not limited to the above.

The robot 10 includes the base 11, a robot arm 12 provided below the base 11, and a working head 13 provided at a tip end portion of the robot arm 12.

The base 11 is attached to the support T1 positioned above the robot arm 12 in the vertical direction. Examples of the support T1 include a ceiling, a column, a beam, and a frame. Accordingly, the robot 10 is suspended from the support T1. The base 11 has a box-shaped housing 11a. The housing 11a includes a housing body 111 whose lower portion is open, and a bottom plate portion 112 that covers the opening in the lower portion of the housing body 111.

The housing body 111 includes a top plate portion 111a parallel to an X-Y plane and a side wall portion 111b extending downward from an outer peripheral edge portion of the top plate portion 111a. The top plate portion 111a is provided with one or more connectors 11i for coupling a device installed in the robot 10 and an external device such as the control device 30. The device installed in the robot 10 is not particularly limited, but examples thereof include a first drive portion 14, a second drive portion 15, a third drive portion 16, a fourth drive portion 17, and the end effector 13d, which will be described later. Further, the devices installed in the robot 10 are not particularly limited, but may include, for example, various components (not shown) including sensors such as an angle sensor and an inertial sensor, a camera, a solenoid valve, and electronic substrates such as power supply substrates and control substrates for these.

The device installed in the robot 10 and the connector 11i are coupled to each other by one or more linear members (not shown) passing through the base 11 and the robot arm 12. In addition, the connector 11i and the external device are coupled by a linear member passing through the outside of the robot 10.

Examples of the linear members include wiring and a flexible elongated hollow member, and the like. Examples of the wiring include electrical wiring such as an electric cable, and optical wiring such as an optical fiber. The external device performs transmission and reception of signals and the like with devices installed in the robot 10 via the wiring and the connector 11i. Further, a fluid such as air flows through the interior of the elongated hollow member, and the external device can supply the fluid to devices installed in the robot 10 such as the end effector 13d via the elongated hollow member, or can suck a fluid around the devices. Examples of the elongated hollow member are not particularly limited, and include, for example, a tube, a pipe, a hose, and a duct.

The connector 11i may be a connector capable of coupling electrical wiring, may be a connector capable of coupling optical wiring, or may be a connector capable of coupling an elongated hollow member. Further, a plurality of linear members may be bundled. Further, the linear members may branch into a plurality of linear members at an intermediate portion. In addition, a relay device or a relay connector may be provided in the middle of the linear member.

The bottom plate portion 112 has a flat plate shape parallel to the X-Y plane. The bottom plate portion 112 is fixed to a lower end portion of the housing body 111 by screwing or the like. In plan view, an outer peripheral edge portion of the bottom plate portion 112 protrudes outward from the housing body 111. An upper surface of the outer peripheral edge portion of the bottom plate portion 112 is in contact with a lower surface of the support T1, and the outer peripheral edge portion of the bottom plate portion 112 is fixed to the support T1 by screwing or the like.

The robot arm 12 is positioned below the base 11. The robot arm 12 includes the first arm 12a provided on the base 11 and the second arm 12b provided on the first arm 12a.

The first arm 12a is positioned below the base 11. A base end portion of the first arm 12a is rotatably coupled to the base 11 about a first axis A1. The first axis A1 is parallel to the Z-axis direction.

The first arm 12a includes a first arm base 121a and an accommodating portion 121b. The first arm base 121a extends in a direction orthogonal to the first axis A1, that is, in a direction parallel to the X-Y plane. As shown in FIG. 4, the first arm base 121a is hollow and has, for example, a rectangular parallelepiped shape with rounded corners. The side wall portion of the first arm base 121a has a rib structure. Thus, the strength of the first arm base 121a can be increased.

As shown in FIG. 1, the accommodating portion 121b accommodates a second motor 151 of the second drive portion 15 described later, and protrudes downward from the first arm base 121a. Therefore, when the first arm 12a is rotated with respect to the base 11, the accommodating portion 121b and the base 11 do not interfere with each other. Therefore, the first arm 12a can be brought closer to the base 11 as compared with the case where the accommodating portion 121b protrudes upward from the first arm base 121a. In the present specification, "the accommodating portion 121b accommodates the second motor 151" means that most of the second motor 151 is accommodated in the accommodating portion 121b, and part of the second motor 151 is allowed to protrude upward from the accommodating portion 121b. Further, the accommodating portion 121b is spaced apart from the second arm 12b. Therefore, it is possible to provide a structure in which the first arm 12a and the second arm 12b do not interfere with each other when the second arm 12b is rotated with respect to the first arm 12a while the accommodating portion 121b protrudes downward from the first arm base 121a. However, a shape of the first arm 12a is not limited to the shape described above and shown in the drawings.

The second arm 12b is positioned below the first arm 12a. A base end portion of the second arm 12b is rotatably coupled to a tip end portion of the first arm 12a about a second axis A2. The second axis A2 is parallel to the first axis A1.

The second arm 12b includes a connection portion 122a that extends along the second axis A2 and is rotatably coupled to the tip end portion of the first arm 12a about the second axis A2, and a housing 122b that accommodates the third drive portion 16 and the fourth drive portion 17 described later and in which the working head 13 is provided. The housing 122b includes a second arm base 123 that is coupled to a lower end portion of the connection portion 122a and extends in a direction orthogonal to the second axis A2, and a cover 124 that is disposed above the second arm base 123 and on a side of the connection portion 122a and is detachably attached to the second arm base 123.

Hereinafter, a direction parallel to the first axis A1, the second axis A2, and the third axis A3 is also referred to as a "first direction D1", a direction orthogonal to the first direction D1 and directed from the second axis A2 toward the third axis A3 is also referred to as a "second direction D2", and a direction orthogonal to the first direction D1 and the second direction D2 is also referred to as a "third direction D3". The first direction D1 is a direction parallel to the Z-axis direction. The second direction D2 and the third direction D3 are parallel to the X-Y plane, and their orientations change in accordance with the rotation of the second arm 12b. In addition, each of the directions D1, D2, and D3 is represented by an arrow, and a tip end side of the arrow is defined as a "+ side", and a base end side of the arrow is defined as a "- side".

The connection portion 122a is hollow and has, for example, a cylindrical shape. A length of the connection portion 122a in the first direction D1 is set to a length such that, when the second arm 12b is rotated in a state in which the shaft 13c is at the uppermost position, the shaft 13c does not contact the first arm 12a. Therefore, in the present embodiment, the second arm 12b can rotate by 360° with respect to the first arm 12a.

However, the configuration of the connection portion 122a is not limited to the configuration described above and shown in the drawings. For example, an upper end portion of the connection portion 122a may be fixed to the first arm base 121a, and a lower end portion of the connection portion 122a may be rotatably coupled to the base end portion of the second arm base 123 about the second axis A2. Further, the connection portion 122a may include a first portion which is fixed to the first arm base 121a and extends along the first axis A1, and a second portion which is rotatably coupled to a lower end of the first portion about the second axis A2, is fixed to the second arm base 123, and extends along the first axis A1.

The second arm base 123 extends in the second direction D2. As shown in FIG. 5, the second arm base 123 is hollow and has, for example, a rectangular parallelepiped shape with rounded corners. A side wall portion of the second arm base 123 has a rib structure. Thus, the strength of the second arm base 123 can be increased. However, the shape of the second arm base 123 is not limited to the shape described above and shown in the drawings.

In the present embodiment, the first arm base 121a and the second arm base 123 are manufactured by extrusion molding. Specifically, the first arm base 121a and the second arm base 123 are manufactured by performing extrusion molding using molding dies having the same shape to obtain molded products, and then performing processing of through holes, recessed portions, and the like on the molded products in accordance with devices, linear members, and the like installed in the respective arm bases.

Therefore, a cross-sectional shape orthogonal to a longitudinal direction of the first arm base 121a is constant in the longitudinal direction of the first arm base 121a. Further, a cross-sectional shape orthogonal to the longitudinal direction of the second arm base 123 is constant in the longitudinal direction (second direction D2) of the second arm base 123. Hereinafter, the cross-sectional shape orthogonal to the longitudinal direction of each of the arm bases 121a and 123 is also referred to as a "transverse cross-sectional shape". As shown in FIGS. 4 and 5, the transverse cross-sectional shape of the first arm base 121a is the same as the transverse cross-sectional shape of the second arm base 123.

Here, the term "transverse cross-sectional shape" means an outer shape of a transverse cross section that ignores through holes, recessed portions, and the like. Further, here, "the transverse cross-sectional shape is the same" includes not only a case where two transverse cross-sectional shapes completely coincide with each other, but also a case where the two transverse cross-sectional shapes are substantially the same to an extent that allows manufacturing errors. As described above, in the present embodiment, when the first arm base 121a and the second arm base 123 are manufactured by extrusion molding, a common molding die is used. Accordingly, it is possible to easily and efficiently manufacture the robot 10 and to reduce the manufacturing cost. In particular, as in the present embodiment, when the first arm base 121a and the second arm base 123 have complicated shapes such as rib structures for reinforcement, it is not necessary to prepare two kinds of complicated molding dies, which is particularly advantageous.

In the present embodiment, a length of the first arm base 121a in the longitudinal direction and a length of the second arm base 123 in the longitudinal direction are the same. However, the length of the first arm base 121a in the longitudinal direction and the length of the second arm base 123 in the longitudinal direction may be made different from each other by making the extrusion lengths at the time of extrusion molding different from each other. Further, the manufacturing method of the first arm base 121a and the second arm base 123 is not limited to the extrusion molding method using the common molding die. In addition, the first arm base 121a may have a portion having a different transverse cross-sectional shape in the longitudinal direction, and the second arm base 123 may have a portion having a different transverse cross-sectional shape in the longitudinal direction. In addition, all or part of the transverse cross-sectional shape of the first arm base 121a may be different from the transverse cross-sectional shape of the second arm base 123.

Each of the housing 11a of the base 11, the first arm base 121a, the accommodating portion 121b, the connection portion 122a, and the second arm base 123 is formed of a rigid body. In the present specification, the term "rigid body" refers to a body whose deformation is sufficiently small to be negligible when a force is applied, that is, the rigid body is a substantially rigid body. The constituent materials of the housing 11a of the base 11, the first arm base 121a, the accommodating portion 121b, the connection portion 122a, and the second arm base 123 are not particularly limited, but examples thereof include various metal materials, various resin materials, various ceramic materials, and materials obtained by combining two or more of these materials. Examples of the metal materials include, but are not particularly limited to, iron, stainless steel, aluminum, copper, titanium, and alloys containing two or more of these metal materials.

As described above, when the first arm base 121a and the second arm base 123 are manufactured by extrusion molding, the constituent materials thereof are not particularly limited, but for example, alloys containing aluminum, glass, carbon fibers, composite materials thereof, and the like are preferably used. In addition, the constituent material of the accommodating portion 121b and the cover 124 is not particularly limited, but it is preferable to use, for example, polyolefins such as polyethylene and polypropylene, polyesters such as polyethylene terephthalate, thermoplastic resins such as acrylic resins, thermosetting resins such as epoxy resins and phenol resins, and the like.

As shown in FIG. 1, the cover 124 is constituted of, for example, a plate material formed into a desired three-dimensional shape. When the cover 124 is mounted to the second arm base 123, an internal space is formed between the cover 124 and the second arm base 123.

As shown in FIG. 6, a maximum length H1 of the cover 124 in the first direction D1 is larger than a maximum length H2 of the accommodating portion 121b in the first direction D1. Therefore, the accommodating portion 121b can be disposed below the first arm base 121a, and the maximum length of the internal space of the cover 124 in the first direction D1 can be sufficiently secured. Accordingly, internal components such as a third motor 161, a transmission portion 162, and a fourth motor 171, which will be described later, can be accommodated in the cover 124.

The unit of H1 is the same as that of H2. In this case, H2/H1 is not particularly limited, but is preferably 0.15 or more and 0.97 or less, and more preferably 0.3 or more and 0.9 or less. Accordingly, a balance between H1 and H2 is further improved, and, as described above, each of an accommodation space of the accommodating portion 121b and an internal space of the cover 124 can be sufficiently secured.

Further, as shown in FIG. 1, one or more connectors 124i for coupling devices installed on an outer surface of the second arm 12b or on the shaft 13c with linear members extending from the connector 11i of the base 11 are provided on an upper surface of the cover 124. Examples of the devices installed on the outer surface of the second arm 12b or on the shaft 13c are not particularly limited, and include, for example, the end effector 13d and components (not shown) such as sensors, a camera, and a solenoid valve.

When viewed from the first direction D1, the accommodating portion 121b of the first arm 12a is positioned inside a trajectory traced by the connector 124i when the second arm 12b is rotated. Therefore, it is possible to suppress contact between the connector 124i provided on the upper surface of the cover 124 and linear members that are coupled to the connector 124i and exposed to the outside, and the accommodating portion 121b when the second arm 12b is rotated with respect to the first arm 12a. Accordingly, the second arm 12b can be smoothly rotated with respect to the first arm 12a.

The cover 124 may be constituted by a rigid body, may be constituted by a material having flexibility or elasticity to such an extent that the material slightly deforms when a force is applied, or may be constituted by a material combining these. As constituent materials of the cover 124, the materials are not particularly limited, and examples thereof include materials similar to those exemplified for the housing 11a of the base 11.

The working head 13 is provided at an end portion (a tip end portion) of the second arm 12b on a + side in the second direction D2. The working head 13 includes a spline nut 13a and a ball screw nut 13b that are coaxially disposed on the third axis A3, and the shaft 13c that penetrates the spline nut 13a and the ball screw nut 13b. The third axis A3 is parallel to the first axis A1 and the second axis A2.

The shaft 13c is also referred to as a spline shaft or a work shaft. The shaft 13c extends along the third axis A3. The shaft 13c is rotatable about the third axis A3 and is movable upward and downward along the third axis A3. Specifically, rotation of the spline nut 13a causes the shaft 13c to rotate about the third axis A3. In addition, rotation of the ball screw nut 13b causes the shaft 13c to move upward and downward in a direction along the third axis A3.

The end effector 13d is attached to a lower end portion of the shaft 13c. The end effector 13d is detachably attached to the shaft 13c. Types of the end effector 13d are not particularly limited, and examples thereof include a hand, a drill, and a suction head.

The spline nut 13a is disposed in a lower portion of the second arm base 123. The ball screw nut 13b is positioned above the spline nut 13a and is disposed from above the second arm base 123 to the interior of the second arm base 123. However, arrangement positions of the spline nut 13a and the ball screw nut 13b are not limited to the above.

An upper stopper 131 is provided at an upper end portion of the shaft 13c to suppress the shaft 13c from coming out downward from the second arm 12b when the shaft 13c is moved downward. Similarly, a lower stopper 132 is provided at a lower portion of the shaft 13c to suppress the shaft 13c from coming out upward from the second arm 12b when the shaft 13c is moved upward.

A through hole penetrating the second arm base 123 along the third axis A3 is provided at a tip end portion of the second arm base 123. Further, a through hole penetrating the cover 124 in a thickness direction along the third axis A3 is provided at an end portion of the cover 124 on the + side in the second direction D2. The shaft 13c penetrates these through holes.

As the shaft 13c is moved downward, the upper end portion of the shaft 13c and the upper stopper 131 are accommodated in the cover 124. Then, a descending range of the shaft 13c is limited by a control program of the robot 10 such that the shaft 13c is not moved downward from a state in which the upper stopper 131 is spaced upward from a pulley 162b of the third drive portion 16 described later by a predetermined clearance. Further, as the shaft 13c is moved upward, the upper end portion of the shaft 13c and the upper stopper 131 are exposed to the outside of the cover 124. Then, an ascending range of the shaft 13c is limited by the control program of the robot 10 such that the shaft 13c is not moved upward from a state in which the lower stopper 132 shown in FIG. 6 is spaced downward from the spline nut 13a by a predetermined clearance. Hereinafter, a movement distance of the shaft 13c in the first direction D1 from a state in which the shaft 13c is at the uppermost position to a state in which the shaft 13c is at the lowermost position is also simply referred to as a "maximum stroke length S by which the shaft 13c is movable upward and downward". That is, the maximum stroke length S by which the shaft 13c is movable upward and downward corresponds to a difference, in the Z-axis direction, between a position at which the shaft 13c is at the uppermost position and a position at which the shaft 13c is at the lowermost position. Since the upper end portion of the shaft 13c can be exposed to the outside of the cover 124, the maximum stroke length S by which the shaft 13c is movable upward and downward can be increased as compared with a case where the cover 124 has a shape that always covers the upper end portion of the shaft 13c.

The state in which the shaft 13c is at the lowermost position may be a position at which the upper stopper 131 comes into contact with an upper surface of the pulley 162b of the third drive portion 16. Further, the state in which the shaft 13c is at the uppermost position may be a position at which the lower stopper 132 comes into contact with a lower surface of the spline nut 13a. In addition, a user of the robot 10 may further impose a limitation on a length by which the shaft 13c moves upward and downward, such that the shaft 13c moves upward and downward by a length shorter than the maximum stroke length S by which the shaft 13c is movable upward and downward, in accordance with positions of objects such as a workpiece disposed in a work space. However, even in this case, the maximum stroke length S by which the shaft 13c is movable upward and downward means an original length by which the shaft 13c is movable upward and downward before the user sets the limitation.

A distance between a lower end of the shaft 13c and the support T1 in a state in which the shaft 13c is at the uppermost position is defined as H. That is, H corresponds to the minimum of the distances between the lower end of the shaft 13c and the support T1. The units of S and H are the same. In this case, H and S are not particularly limited, however, it is preferable that H ≤ 3S, more preferably that H ≤ 2.7S, and further preferably that 1.4S ≤ H ≤ 2.5S. Thus, the shaft 13c is less likely to interfere with objects such as a workpiece or a floor positioned below the shaft 13c. That is, the maximum stroke length S by which the shaft 13c is movable upward and downward can be sufficiently utilized. As a result, types of work and a work range that can be performed by the robot 10 can be expanded. In addition, a range of selection of the end effector 13d to be attached to the shaft 13c and a workpiece serving as a work object can be expanded.

As shown in FIG. 1, the robot 10 further includes the first drive portion 14, the second drive portion 15, the third drive portion 16, and the fourth drive portion 17.

The first drive portion 14 rotates the first arm 12a about the first axis A1 with respect to the base 11. The first drive portion 14 includes a first motor 141, a belt transmission device 142, and a speed reducer 200. The first motor 141 generates power for rotating the first arm 12a with respect to the base 11. The belt transmission device 142 transmits power of the first motor 141 to the speed reducer 200. The speed reducer 200 reduces a rotational speed from the first motor 141 transmitted from the belt transmission device 142, and transmits power of the first motor 141 to the first arm 12a. As described above, in the present specification, "reducing a rotational speed from the first motor 141 and transmitting power of the first motor 141 to the first arm 12a" permits that another member such as the belt transmission device 142 is interposed between the first motor 141 and the speed reducer 200, and that another member such as a second support member 146 described later is interposed between the speed reducer 200 and the first arm 12a. The same applies to the second drive portion 15 described later. A more detailed configuration of the first drive portion 14 will be described later.

The second drive portion 15 rotates the second arm 12b about the second axis A2 with respect to the first arm 12a. The second drive portion 15 includes the second motor 151, a belt transmission device 152, and a speed reducer 153. The second motor 151 generates power for rotating the second arm 12b with respect to the first arm 12a. The belt transmission device 152 transmits power of the second motor 151 to the speed reducer 153. The speed reducer 153 reduces a rotational speed from the second motor 151 transmitted from the belt transmission device 152, and transmits power of the second motor 151 to the second arm 12b. A detailed configuration of the second drive portion 15 will be described later.

The third drive portion 16 moves the shaft 13c upward and downward along the third axis A3. The third drive portion 16 is accommodated in the housing 122b of the second arm 12b. The third drive portion 16 includes the third motor 161 that generates power for moving the shaft 13c upward and downward, and the transmission portion 162 that transmits power of the third motor 161 to the shaft 13c.

The third motor 161 is disposed on the second arm base 123. The third motor 161 is positioned between the connection portion 122a and the shaft 13c. An output shaft of the third motor 161 protrudes downward from a housing of the third motor 161.

The transmission portion 162 is positioned on the second arm base 123. In the present embodiment, the transmission portion 162 is constituted by a single-stage reduction-type belt transmission device. The transmission portion 162 includes a pulley 162a, a pulley 162b, and an endless belt 162c. The pulley 162a is fixed to the output shaft of the third motor 161. The pulley 162b is fixed coaxially with the shaft 13c to the ball screw nut 13b. The endless belt 162c is wound around the pulley 162a and the pulley 162b.

The fourth drive portion 17 rotates the shaft 13c about the third axis A3. The fourth drive portion 17 is accommodated in the housing 122b of the second arm 12b. The fourth drive portion 17 includes the fourth motor 171 that generates power for rotating the shaft 13c, and a transmission portion 172 that reduces the rotational speed from the fourth motor 171 and transmits power of the fourth motor 171 to the shaft 13c.

The fourth motor 171 is disposed on the second arm base 123. The fourth motor 171 is positioned between the connection portion 122a and the third motor 161. An output shaft of the fourth motor 171 protrudes downward from a housing of the fourth motor 171. However, the third motor 161 and the fourth motor 171 may be disposed side by side in the third direction D3. In addition, the fourth motor 171 may be disposed between the third motor 161 and the shaft 13c.

The transmission portion 172 is accommodated in the second arm base 123. In the present embodiment, the transmission portion 172 is constituted by a two-stage reduction-type belt transmission device. The transmission portion 172 includes a pulley 172a, a pulley 172b, an endless belt 172c, a shaft member 172d, a pulley 172e, a pulley 172f, and an endless belt 172g. The pulley 172a is fixed to the output shaft of the fourth motor 171. The pulley 172b is positioned between the pulley 172a and the shaft 13c. The endless belt 172c is wound around the pulley 172a and the pulley 172b. The pulley 172e is fixed coaxially to the pulley 172b. The pulley 172f is fixed to the spline nut 13a coaxially with the shaft 13c. The endless belt 172g is wound around the pulley 172e and the pulley 172f. The shaft member 172d is provided with the pulley 172b and the pulley 172e. The shaft member 172d is rotatably supported by the second arm base 123.

However, the number of reduction stages of the transmission portions 162 and 172 is not limited to the above. In addition, the transmission portions 162 and 172 are not limited to belt transmission devices, and may be constituted by gear devices such as planetary gear devices or harmonic drive gear devices, or combinations of belt transmission devices and gear devices.

The control device 30 is positioned outside the robot 10. However, the control device 30 may be accommodated in the base 11. The control device 30 includes a storage portion, a control portion, and a communication portion. These components are connected to each other via a bus.

The storage portion is constituted by memories such as a random access memory (RAM) and a read-only memory (ROM). The storage portion stores various programs such as a control program for controlling operation of the robot 10, and various data.

The control portion is constituted by at least one processor such as a central processing unit (CPU). The control portion reads and executes various programs stored in the storage portion.

The communication portion is constituted by various interfaces capable of communicating with external devices such as the robot 10 and a teaching device (not shown). The communication portion transmits and receives information and signals to and from external devices. Communication by the communication portion may be communication via a network such as a local area network (LAN) or the Internet. Further, communication modes may be wired or wireless.

Next, a coupling structure between the base 11 and the first arm 12a will be described in detail.

As shown in FIG. 2, a first through hole 112h extending along the first axis A1 is provided in the bottom plate portion 112 of the base 11. Further, in an upper surface of the bottom plate portion 112, a recessed portion 112d recessed downward is provided in an outer peripheral portion of the first through hole 112h. The recessed portion 112d has an annular shape centered on the first axis A1 in plan view.

The first motor 141 of the first drive portion 14 is provided in the housing 11a. The first motor 141 is disposed at a position spaced apart from the first axis A1 in a direction orthogonal to the first axis A1 (the + side in the Y-axis direction), and spaced upward from the bottom plate portion 112 of the housing 11a. With an output shaft of the first motor 141 protruding downward from the housing of the first motor 141, the housing of the first motor 141 is fixed to the housing 11a via a support tool (not shown).

The belt transmission device 142 of the first drive portion 14 is provided in the housing 11a. The belt transmission device 142 includes a first pulley 142a coupled to the output shaft of the first motor 141, a second pulley 142b having a rotation center on the first axis A1, and an endless belt 142c wound around the first pulley 142a and the second pulley 142b. The first pulley 142a and the second pulley 142b are positioned above the bottom plate portion 112. A screw hole 142h extending in a radial direction is provided in the second pulley 142b. The screw hole 142h communicates between the outside and the internal space of the second pulley 142b. In the present embodiment, an outer diameter of the first pulley 142a and an outer diameter of the second pulley 142b are substantially equal. However, the outer diameter of the first pulley 142a may be larger or smaller than the outer diameter of the second pulley 142b.

In the present embodiment, the speed reducer 200 of the first drive portion 14 is constituted by a harmonic drive gear device. The harmonic drive gear device is more compact and has a larger reduction ratio than a wrap transmission device or the like. The speed reducer 200 includes an input shaft 210 constituted by a wave generator, an intermediate portion 220 constituted by a flex spline, an output shaft 230 constituted by a circular spline, and a bearing 240. However, the speed reducer 200 may be constituted by another gear device such as an eccentric oscillating gear device.

The reduction ratio of the speed reducer 200, that is, a rotational speed of the input shaft 210/a rotational speed of the output shaft 230, is not particularly limited, but in the present embodiment, is preferably 10 or more and 200 or less, and more preferably 50 or more and 150 or less.

The speed reducer 200 is provided inside the housing 11a. In this specification, "the speed reducer 200 is provided inside the housing 11a" means that a majority of the speed reducer 200 is disposed inside the housing 11a, and permits that part of the speed reducer 200 protrudes outside the housing 11a. By providing the speed reducer 200 inside the housing 11a, a separation distance G1 in a direction parallel to the first axis A1 between the base 11 and the first arm 12a can be shortened as compared with a case where the entire speed reducer 200 is positioned outside the base 11. As a result, a lower end portion of the shaft 13c provided on the second arm 12b becomes less likely to interfere with a workpiece, a floor, or another object positioned below the shaft 13c. Therefore, the maximum stroke length S by which the shaft 13c is movable upward and downward can be sufficiently utilized.

The separation distance G1 between the base 11 and the first arm 12a, that is, a separation distance G1 between the bottom plate portion 112 and the first arm base 121a, is not particularly limited, but is preferably 2.0 mm or more and 4.0 mm or less, and more preferably 2.5 mm or more and 3.5 mm or less. Accordingly, while smoothly rotating the first arm 12a with respect to the base 11, excessive separation between the base 11 and the first arm 12a can be suppressed.

In addition, part of the speed reducer 200 is disposed inside the first through hole 112h. Accordingly, while disposing the speed reducer 200 inside the housing 11a of the base 11, excessive separation between the speed reducer 200 and the first arm 12a can be suppressed. Therefore, by rotating the first arm 12a, a bending moment acting on the speed reducer 200 can be reduced, and each portion such as the input shaft 210 and the output shaft 230 of the speed reducer 200 becomes less likely to experience shaft runout. As a result, wear of each portion of the speed reducer 200 can be suppressed, and a service life of the speed reducer 200 can be extended. In addition, as a result, power transmission loss from the speed reducer 200 to the first arm 12a can be reduced.

As the speed reducer 200 is positioned higher, it is necessary to dispose the first motor 141 and the belt transmission device 142 higher. Accordingly, a length of the housing 11a in a direction parallel to the first axis A1 increases. The base 11 of the ceiling-suspended robot 10 is often disposed in a ceiling space in which space is limited. Therefore, by disposing the speed reducer 200 in a lower portion of the housing 11a as in the present embodiment, an increase in the length of the housing 11a in the direction parallel to the first axis A1 can be suppressed. Accordingly, the base 11 of the ceiling-suspended robot 10 can be easily disposed in a ceiling space in which an available installation space is limited.

The total length of the speed reducer 200 in the Z-axis direction is defined as L0, and the length, in the Z-axis direction, of a portion of the speed reducer 200 positioned below a lower surface of the bottom plate portion 112 is defined as L1. The units of L0 and L1 are the same. In this case, L1/L0 × 100 [%] is not particularly limited, but is preferably 0% or more and 10% or less, and more preferably 5% or more and 10% or less.

The input shaft 210 is disposed along the first axis A1 and rotates about the first axis A1 by power of the first motor 141 transmitted from the second pulley 142b. The input shaft 210 includes a tubular main body portion 211 and a bearing 212 disposed inside the main body portion 211.

The main body portion 211 is formed of a rigid body. An upper end portion of the main body portion 211 is positioned above the bottom plate portion 112, and the main body portion 211 passes through the first through hole 112h. Accordingly, while the speed reducer 200 is provided inside the housing 11a, excessive separation between the speed reducer 200 and the first arm 12a can be suppressed. A lower end portion of the main body portion 211 is positioned below the bottom plate portion 112 and protrudes downward beyond the output shaft 230. As shown in FIG. 3, an outer peripheral surface of a portion of the main body portion 211 on which the bearing 212 is mounted has an elliptical shape in plan view. Since the main body portion 211 has a portion whose outer peripheral surface is elliptical in shape, the main body portion 211 is also referred to as an elliptical cam.

As shown in FIG. 2, the upper end portion of the main body portion 211 is disposed inside the second pulley 142b. A set screw 142s is screwed into the screw hole 142h of the second pulley 142b and is pressed against the outer peripheral surface (side surface) of the main body portion 211. If the second pulley 142b is fixed to the main body portion 211 by a screw whose screw axis extends in a direction parallel to the first axis A1, it is necessary to provide, in the main body portion 211, a screw hole extending in the direction parallel to the first axis A1, and accordingly, it is necessary to increase a radial thickness of the main body portion 211. In contrast, in the present embodiment, since it is not necessary to provide a screw hole in the input shaft 210, the radial thickness of the input shaft 210 can be reduced. As a result, as will be described in detail later, an inner diameter of a sleeve 147 disposed inside the main body portion 211 can be increased. As a result, the number of linear members passing through an inside of the sleeve 147 can be increased. However, a fixing method between the second pulley 142b and the input shaft 210 is not limited to the method using the set screw 142s described above. For example, the second pulley 142b may be fixed to the input shaft 210 by a screw whose screw axis extends in the direction parallel to the first axis A1.

The bearing 212 of the input shaft 210 is constituted by a deep groove ball bearing, and includes an inner ring 213, an outer ring 214, rolling elements 215, and a cage 216. However, the bearing 212 may be constituted by another ball bearing such as an angular contact ball bearing, or another rolling bearing such as a roller bearing. The bearing 212 is positioned slightly above a lower end of the main body portion 211. The bearing 212 is disposed in the first through hole 112h.

The inner ring 213 and the outer ring 214 have elasticity. The inner ring 213 is fixed to the outer peripheral surface of the main body portion 211, and rotates about the first axis A1 together with the main body portion 211. As shown in FIG. 3, the inner ring 213 and the outer ring 214 have an elliptical shape following the shape of the elliptical portion of the main body portion 211.

As shown in FIG. 2, the intermediate portion 220 is constituted by a so-called silk hat type flex spline. The input shaft 210 is disposed inside the intermediate portion 220. The intermediate portion 220 has flexibility, and includes a tubular portion 221 extending along the first axis A1, and an annular outer peripheral portion 222 that is continuous with an upper end portion of the tubular portion 221 and extends radially outward from the tubular portion 221.

An upper end portion of the tubular portion 221 is positioned above the bottom plate portion 112. An external gear 221a is provided at a lower end portion of the tubular portion 221. The external gear 221a is disposed in the first through hole 112h. The lower end of the external gear 221a is substantially flush with the lower surface of the bottom plate portion 112. As shown in FIG. 3, the bearing 212 of the input shaft 210 is disposed inside the external gear 221a, and is in contact with the outer ring 214 of the bearing 212. That is, the external gear 221a and the outer ring 214 correspond to a "contact portion 210A" between the input shaft 210 and the intermediate portion 220. The contact portion 210A is positioned in the first through hole 112h.

The external gear 221a has a shape following the shape of the outer ring 214 of the input shaft 210. Accordingly, an imaginary curve C1 coupling a plurality of tooth tips of the external gear 221a has an elliptical shape following the shape of the outer ring 214 of the input shaft 210. When the main body portion 211 rotates, the positions of the long and short axes of the outer peripheral surface of the main body portion 211 change about the first axis A1 in plan view. In response to this, the positions of the long and short axes of the curve C1 also change about the first axis A1.

As shown in FIG. 2, the bearing 240 fixes the intermediate portion 220 to the housing 11a and rotatably supports the output shaft 230. In the present embodiment, the bearing 240 is constituted by a crossed roller bearing, and includes the inner ring 241, the outer ring 242, and the rolling elements 243. The tubular portion 221 of the intermediate portion 220 is disposed inside the bearing 240. The upper end portion of the inner ring 241 of the bearing 240, the upper end portion of the outer ring 242, and the rolling elements 243 of the bearing 240 are positioned above the bottom plate portion 112.

The inner ring 241 is spaced apart from the intermediate portion 220. The lower end portion of the inner ring 241 is positioned in the first through hole 112h and is fixed to the output shaft 230.

The outer ring 242 corresponds to a "fixed portion" that is fixed to the housing 11a in the speed reducer 200. An upper surface of the outer ring 242 fixes the outer peripheral portion 222 of the intermediate portion 220. A lower end portion of the outer ring 242 is disposed within the recessed portion 112d of the bottom plate portion 112, and is fixed to the bottom plate portion 112 by screwing or the like. Accordingly, while the speed reducer 200 is provided within the housing 11a of the base 11, excessive separation between the speed reducer 200 and the first arm 12a can be suppressed. Further, thereby, excessive separation of the rolling elements 243 from the first arm 12a is suppressed. As a result, in the bearing 240, a bending moment applied to a portion near the rolling elements 243 by rotation of the first arm 12a is reduced. As a result, wear of the bearing 240 is suppressed. As a result, a service life of the speed reducer 200 is extended. However, a configuration in which the recessed portion 112d is not provided in the bottom plate portion 112 may also be adopted.

The output shaft 230 outputs the rotation having a reduced rotational speed. That is, the output shaft 230 rotates at a rotational speed reduced relative to a rotational speed of the input shaft 210. An entirety of the output shaft 230 is disposed within the first through hole 112h. Accordingly, while the speed reducer 200 is provided within the housing 11a of the base 11, excessive separation between the speed reducer 200 and the first arm 12a can be suppressed. In the present embodiment, a lower end of the output shaft 230 is flush with a lower surface of the bottom plate portion 112. However, the lower end of the output shaft 230 may be positioned above the lower surface of the bottom plate portion 112. Further, part of the output shaft 230 may protrude upward or downward from the first through hole 112h.

The output shaft 230 is constituted by a rigid body. As shown in FIG. 3, the output shaft 230 is formed as an internal gear. The number of teeth provided on the output shaft 230 is larger than the number of teeth provided on the external gear 221a of the intermediate portion 220. Further, a curve coupling a plurality of tooth tips provided on the output shaft 230 is circular.

Therefore, some of the plurality of teeth provided on the external gear 221a portion of the intermediate portion 220 and some of the plurality of teeth provided on the output shaft 230 mesh with each other. More specifically, among all of the teeth provided on the external gear 221a, teeth positioned in a vicinity of a long axis of the outer peripheral surface of the main body portion 211 mesh with, among all of the teeth provided on the output shaft 230, teeth positioned in a vicinity of the long axis of the outer peripheral surface of the main body portion 211. Further, among all of the teeth provided on the external gear 221a, teeth positioned in a vicinity of a short axis of the outer peripheral surface of the main body portion 211 and, among all of the teeth provided on the output shaft 230, teeth positioned in a vicinity of the short axis of the outer peripheral surface of the main body portion 211 do not mesh and are spaced apart from each other.

As described above, when the main body portion 211 and the inner ring 213 of the bearing 212 rotate about the first axis A1, in plan view, orientations of the long axis and the short axis of the imaginary curve C1 coupling the plurality of tooth tips of the external gear 221a of the intermediate portion 220 also change about the first axis A1. Accordingly, a meshing position between the external gear 221a and the output shaft 230 changes about the first axis A1 in accordance with a position of the long axis of the outer peripheral surface of the main body portion 211. As described above, the number of teeth provided on the output shaft 230 is larger than the number of teeth provided on the intermediate portion 220, and even when the input shaft 210 makes one rotation, the output shaft 230 rotates only by a rotation angle corresponding to a difference in the number of teeth between the intermediate portion 220 and the output shaft 230. Accordingly, a rotation speed of the output shaft 230 is lower than a rotational speed of the input shaft 210. That is, the output shaft 230 can output the rotation having a reduced rotational speed.

A contact portion 230A between the external gear 221a of the intermediate portion 220 and the output shaft 230 is positioned within the first through hole 112h. Further, as described above, the contact portion 210A between the input shaft 210 and the intermediate portion 220 is also positioned within the first through hole 112h. Accordingly, while the speed reducer 200 is provided within the housing 11a of the base 11, excessive separation between a portion in the speed reducer 200 where power is transmitted and the first arm 12a can be suppressed. As a result, power transmission loss from the speed reducer 200 to the first arm 12a can be reduced. In addition, since Z-axis direction positions (heights) of the contact portion 210A and the contact portion 230A are the same, a Z-axis direction length (height) of the speed reducer 200 can be made relatively small.

As shown in FIG. 2, the first drive portion 14 further includes a first bearing 144a, a second bearing 144b, a first support member 145, and a second support member 146.

The first bearing 144a rotatably supports the input shaft 210 and is positioned above the bottom plate portion 112. An inner ring of the first bearing 144a is fixed to a portion of the main body portion 211 of the input shaft 210 that is positioned above the bearing 240 and below the second pulley 142b.

The first support member 145 has an annular shape centered on the first axis A1, and the first bearing 144a is disposed inside the first support member 145. An outer ring of the first bearing 144a is fixed to the first support member 145. That is, the first support member 145 supports the first bearing 144a. The first support member 145 is fixed to the outer peripheral portion 222 of the intermediate portion 220. That is, the first support member 145 is fixed to the housing 11a via the intermediate portion 220 and the outer ring 242 of the bearing 240.

The second bearing 144b rotatably supports the input shaft 210 and is positioned below the bottom plate portion 112. An inner ring of the second bearing 144b is fixed to a portion of the main body portion 211 of the input shaft 210 that is positioned below the bottom plate portion 112. The first bearing 144a and the second bearing 144b can support both a portion of the input shaft 210 positioned above the bottom plate portion 112 and a portion of the input shaft 210 positioned below the bottom plate portion 112. Therefore, the shaft runout of the input shaft 210 can be further suppressed. Thus, the wear of the speed reducer 200 can be further suppressed, and the service life of the speed reducer 200 can be further extended.

The second support member 146 couples the output shaft 230 and the first arm 12a while supporting the second bearing 144b. The second support member 146 has an annular shape centered on the first axis A1, and the second bearing 144b is disposed inside the second support member 146. An outer ring of the second bearing 144b is fixed to the second support member 146. In this manner, since support of the second bearing 144b and coupling between the output shaft 230 and the first arm 12a are performed by a single member, the base 11 and the first arm 12a can be positioned closer to each other. Further, compared with a case where support of the second bearing 144b and coupling between the output shaft 230 and the first arm 12a are performed by separate members, the number of components can be reduced. However, support of the second bearing 144b and coupling between the output shaft 230 and the first arm 12a may be performed by separate members.

An upper wall of the first arm base 121a is provided with a second through hole 121h at a position facing the speed reducer 200. Further, a recessed portion 121d recessed downward is provided in an outer peripheral portion of the second through hole 121h on the upper wall of the first arm base 121a. The recessed portion 121d has an annular shape centered on the first axis A1 in plan view.

The second support member 146 includes a first portion 146a that contacts an upper surface of the first arm base 121a, and a second portion 146b that protrudes downward from an inner peripheral portion of the first portion 146a and is disposed inside the second through hole 121h. A lower end portion of the output shaft 230 is fixed to an upper end portion of the first portion 146a. A lower end portion of the first portion 146a is disposed in the recessed portion 121d and is fixed to the first arm base 121a by screwing or the like. In this manner, by causing the first portion 146a of the second support member 146 to contact the upper surface of the first arm base 121a while fitting the second portion 146b into the second through hole 121h, positional displacement of the second support member 146 relative to the first arm 12a during rotation of the first arm 12a can be suppressed. However, the recessed portion 121d may be omitted from the first arm base 121a.

The sleeve 147 is disposed inside the second pulley 142b, the input shaft 210, and the second portion 146b of the second support member 146. The sleeve 147 forms a passage through which a linear member passes. The sleeve 147 has a tubular shape and extends along the first axis A1. The sleeve 147 is spaced apart from the second pulley 142b and the input shaft 210, and is fixed to the second portion 146b of the second support member 146. That is, the sleeve 147 rotates integrally with the output shaft 230, the second support member 146, and the first arm 12a.

A length, in the Z-axis direction, of a portion of the second support member 146 that is positioned above an upper end of the first arm base 121a is not particularly limited, but is preferably 2 mm or more and 8 mm or less, and more preferably 2.5 mm or more and 7.5 mm or less. By setting the length, in the Z-axis direction, of the portion of the second support member 146 that is positioned above the upper end of the first arm base 121a to be equal to or larger than the above lower limit value, the second bearing 144b can be disposed inside the second support member 146. In addition, by setting the length, in the Z-axis direction, of the portion of the second support member 146 that is positioned above the upper end of the first arm base 121a to be equal to or less than the above upper limit value, an increase in the total length of the second support member 146 in the Z-axis direction can be suppressed.

In the present embodiment, the lower end of the output shaft 230 is flush with the lower surface of the bottom plate portion 112, but the lower end of the output shaft 230 may be positioned above the lower surface of the bottom plate portion 112. In this case, the distance, in the Z-axis direction, between the lower end of the output shaft 230 and the lower surface of the bottom plate portion 112 is preferably set to a length obtained by subtracting a preferable separation distance G1 between the bottom plate portion 112 and the first arm base 121a from a preferable length, in the Z-axis direction, of a portion of the second support member 146 that is positioned above an upper end of the first arm base 121a. The distance, in the Z-axis direction, between the lower end of the output shaft 230 and the lower surface of the bottom plate portion 112 is not particularly limited, but is preferably 0 mm or more and 6 mm or less, and more preferably 0 mm or more and 5 mm or less.

However, positions and shapes of the input shaft 210, the intermediate portion 220, the output shaft 230, and the bearing 240 of the speed reducer 200 are not limited to the positions and shapes described above and shown in the drawings. For example, the tubular portion 221 of the intermediate portion 220 and the lower end portion of the output shaft 230 may protrude downward from the bottom plate portion 112. Further, for example, the lower end portion of the input shaft 210 may be positioned above the lower surface of the bottom plate portion 112. In this case, the lower end portion of the input shaft 210 may not be supported by the second bearing 144b.

Next, the second drive portion 15 will be described in detail.

As shown in FIG. 1, the belt transmission device 152 of the second drive portion 15 includes a third pulley 152a coupled to an output shaft of the second motor 151, a fourth pulley 152b having the second axis A2 as a center axis, and an endless belt 152c wound around the third pulley 152a and the fourth pulley 152b.

The speed reducer 153 of the second drive portion 15 is constituted by a harmonic drive gear device. An input shaft of the speed reducer 153, although not shown, is fixed to the fourth pulley 152b using a set screw, in the same manner as the input shaft 210 of the speed reducer 200 of the first drive portion 14. Accordingly, compared with a case in which the fourth pulley 152b is fixed to the input shaft of the speed reducer 153 by a screw whose screw axis extends in a direction parallel to the second axis A2, a radial thickness of the input shaft of the speed reducer 153 can be reduced. Accordingly, also in the speed reducer 153 of the second drive portion 15, a space into which the linear member is inserted can be sufficiently secured inside the input shaft.

However, the speed reducer 153 may be constituted by another gear device such as an eccentric oscillating gear device, or may be constituted by a wrapping transmission device such as a belt transmission device. In addition, the fixing method of the fourth pulley 152b and the input shaft of the speed reducer 153 is not limited to the above-described method using the set screw. For example, the fourth pulley 152b may be fixed to the input shaft of the speed reducer 153 by a screw whose screw axis extends in the direction parallel to the second axis A2.

As described above, the robot 10 according to the present embodiment includes the base 11, the first arm 12a, the second arm 12b, the shaft 13c, the first motor 141, the speed reducer 200, the second motor 151, and the third motor 161. The base 11 has the housing 11a. The first arm 12a is provided below the base 11 and is rotatable about the first axis A1 with respect to the base 11. The second arm 12b is provided below the first arm 12a and is rotatable about the second axis A2 parallel to the first axis A1 with respect to the first arm 12a. The shaft 13c is provided at the tip end portion of the second arm 12b, and is movable upward and downward along the third axis A3 parallel to the second axis A2. The first motor 141 is provided in the housing 11a and generates power for rotating the first arm 12a with respect to the base 11. The speed reducer 200 is provided in the housing 11a, reduces a rotational speed of the rotation of the first motor 141, and transmits power to the first arm 12a. The second motor 151 generates power for rotating the second arm 12b with respect to the first arm 12a. The third motor 161 generates power for moving the shaft 13c upward and downward.

The housing 11a includes the bottom plate portion 112 provided with the first through hole 112h extending along the first axis A1. A part of the speed reducer 200 is disposed inside the first through hole 112h. The first arm 12a includes the first arm base 121a extending in a direction orthogonal to the first axis A1, and the accommodating portion 121b protruding downward from the first arm base 121a, accommodating the second motor 151, and being spaced apart from the second arm 12b.

By providing the speed reducer 200 inside the housing 11a of the base 11, the first arm 12a can be positioned closer to the base 11 as compared with a case where the entire speed reducer 200 is positioned outside the base 11. In addition, since the accommodating portion 121b that accommodates the second motor 151 protrudes downward from the first arm base 121a, the accommodating portion 121b does not interfere with the base 11 when the first arm 12a rotates. Therefore, the first arm 12a can be brought closer to the base 11 as compared with the case where the accommodating portion 121b protrudes upward from the first arm base 121a. As a result, a lower end portion of the shaft 13c provided on the second arm 12b becomes less likely to interfere with a workpiece, a floor, or another object positioned below the shaft 13c. Therefore, the maximum stroke length S by which the shaft 13c is movable upward and downward can be sufficiently utilized. As a result, types of work and a work range that can be performed by the robot 10 can be expanded. In addition, a range of selection of the end effector 13d to be attached to the shaft 13c and a workpiece serving as a work object can be expanded.

In addition, part of the speed reducer 200 is disposed inside the first through hole 112h of the bottom plate portion 112. Accordingly, while disposing the speed reducer 200 inside the housing 11a of the base 11, excessive separation between the speed reducer 200 and the first arm 12a can be suppressed. Therefore, when the first arm 12a is rotated, a bending moment applied from the first arm 12a to the speed reducer 200 can be reduced, and each portion such as the input shaft 210 and the output shaft 230 of the speed reducer 200 become less likely to experience shaft runout. As a result, wear of each portion of the speed reducer 200 can be suppressed, and a service life of the speed reducer 200 can be extended. In addition, as a result, power transmission loss from the speed reducer 200 to the first arm 12a can be reduced. Further, while disposing the speed reducer 200 inside the housing 11a, an increase in the length of the housing 11a in the direction parallel to the first axis A1 can be suppressed.

In addition, the speed reducer 200 includes the input shaft 210 which is disposed along the first axis A1 and is rotated about the first axis A1 by the power of the first motor 141, and the output shaft 230 which is disposed coaxially with the input shaft 210 and outputs the rotation having the reduced rotational speed. The output shaft 230 is disposed inside the first through hole 112h.

Accordingly, while the speed reducer 200 is provided within the housing 11a of the base 11, excessive separation between the speed reducer 200 and the first arm 12a can be suppressed. As a result, while sufficiently utilizing the maximum stroke length S by which the shaft 13c is movable upward and downward, the service life of the speed reducer 200 can be extended.

In addition, the upper end portion of the input shaft 210 is positioned above the bottom plate portion 112, and the input shaft 210 passes through the first through hole 112h.

Accordingly, while the speed reducer 200 is provided within the housing 11a of the base 11, excessive separation between the speed reducer 200 and the first arm 12a can be suppressed.

In addition, a lower end portion of the input shaft 210 is positioned below the bottom plate portion 112. The robot 10 further includes a first bearing 144a that rotatably supports the input shaft 210 and is positioned above the bottom plate portion 112, and a second bearing 144b that rotatably supports the input shaft 210 and is positioned below the bottom plate portion 112.

Therefore, the shaft runout of the input shaft 210 can be further suppressed. Thus, the wear of each portion of the speed reducer 200 can be further suppressed, and the service life of the speed reducer 200 can be further extended.

In addition, the speed reducer 200 further includes an intermediate portion 220 that is positioned between the input shaft 210 and the output shaft 230 and transmits rotation of the input shaft 210 to the output shaft 230. An upper end portion of the intermediate portion 220 is positioned above the bottom plate portion 112. A contact portion 230A between the intermediate portion 220 and the output shaft 230 is positioned within the first through hole 112h.

Accordingly, while the speed reducer 200 is provided within the housing 11a of the base 11, excessive separation between a portion in the speed reducer 200 where power is transmitted and the first arm 12a can be suppressed. As a result, power transmission loss from the speed reducer 200 to the first arm 12a can be reduced.

In addition, a contact portion 210A between the input shaft 210 and the intermediate portion 220 is positioned inside the first through hole 112h.

Accordingly, while the speed reducer 200 is provided within the housing 11a of the base 11, excessive separation between a portion in the speed reducer 200 where power is transmitted and the first arm 12a can be suppressed. As a result, power transmission loss from the speed reducer 200 to the first arm 12a can be reduced. In addition, since the contact portion 210A and the contact portion 230A are at the same height, the height of the speed reducer 200 can be made relatively small.

The robot 10 further includes a second support member 146 that supports the second bearing 144b and couples the output shaft 230 to the first arm 12a.

In this way, since support of the second bearing 144b and coupling between the output shaft 230 and the first arm 12a are performed by a single member, the first arm 12a can be positioned closer to the base 11. Further, compared with a case where support of the second bearing 144b and coupling between the output shaft 230 and the first arm 12a are performed by separate members, the number of components can be reduced.

Further, a second through hole 121h is provided in the first arm base 121a at a position facing the speed reducer 200. The second support member 146 includes a first portion 146a that contacts an upper surface of the first arm base 121a, and a second portion 146b that protrudes downward from the first portion 146a and is disposed within the second through hole 121h.

In this manner, by causing the first portion 146a of the support member to contact the upper surface of the first arm base 121a while fitting the second portion 146b into the second through hole 121h, positional displacement of the second support member 146 relative to the first arm 12a during rotation of the first arm 12a can be suppressed.

Further, the speed reducer 200 includes a fixed portion (the outer ring 242 of the bearing 240) that is fixed to the housing 11a. A recessed portion 112d in which the fixed portion is disposed is provided on an upper surface of the bottom plate portion 112 around an outer peripheral portion of the first through hole 112h.

Accordingly, while the speed reducer 200 is provided within the housing 11a of the base 11, excessive separation between the speed reducer 200 and the first arm 12a can be suppressed.

Further, the second arm 12b includes a second arm base 123 extending in a direction orthogonal to the second axis A2 and on which the third motor 161 is installed, and a cover 124 detachably attached to the second arm base 123. A maximum length H1 of the cover 124 in the first direction D1, for example, a direction along the second axis A2, is greater than a maximum length H2 of the accommodating portion 121b in the first direction D1, for example, the direction along the second axis A2.

Therefore, the accommodating portion 121b can be disposed below the first arm base 121a, and the maximum length of the internal space of the cover 124 in a direction along the second axis A2 can be sufficiently secured.

Further, the connector 124i is provided on the upper surface of the cover 124. When viewed from the direction parallel to the second axis A2, the accommodating portion 121b is positioned inside the rotation trajectory of the connector 124i when the second arm 12b is rotated.

Accordingly, contact between the connector 124i provided on an upper surface of the cover 124 and a linear member coupled to the connector 124i with the accommodating portion 121b can be suppressed. Accordingly, the second arm 12b can be smoothly rotated with respect to the first arm 12a.

Further, a cross-sectional shape orthogonal to a longitudinal direction of the first arm base 121a is the same as a cross-sectional shape orthogonal to a longitudinal direction of the second arm base 123.

In this manner, by using components having the same cross-sectional shape as the components of the first arm base 121a and the second arm base 123, manufacture of the robot 10 can be performed easily and efficiently. In particular, such components having the same cross-sectional shape can be manufactured by extrusion molding using the same molding die. Accordingly, when the first arm base 121a and the second arm base 123 are manufactured by extrusion molding, the molding die can be shared.

The input shaft 210 has a tubular shape. The robot 10 further includes a first pulley 142a, a second pulley 142b, an endless belt 142c, and a set screw 142s. The first pulley 142a is coupled to an output shaft of the first motor 141. The second pulley 142b has the input shaft 210 of the speed reducer 200 disposed inside the second pulley 142b, and includes a screw hole 142h extending in a radial direction. The endless belt 142c is wound around the first pulley 142a and the second pulley 142b. The set screw 142s is disposed in the screw hole 142h and is pressed against the input shaft 210 of the speed reducer 200.

Accordingly, compared with a case where the second pulley 142b is fixed to the input shaft 210 of the speed reducer 200 by a screw whose screw axis extends in a direction along the first axis A1, a radial thickness of the input shaft 210 can be reduced. As a result, a space for allowing a linear member to pass through an inside of the input shaft 210 can be sufficiently secured.

Further, the base 11 is fixed to the support T1 positioned above the first arm 12a. A maximum stroke length by which the shaft 13c is movable upward and downward is defined as S, and a distance between a lower end of the shaft 13c and the support T1 when the shaft 13c is at the uppermost position is defined as H. At this time, a relationship H ≤ 3S is satisfied.

Accordingly, the shaft 13c becomes less likely to interfere with an object such as a workpiece positioned below the shaft 13c. That is, the maximum stroke length S by which the shaft 13c is movable upward and downward can be sufficiently utilized.

Although the robot according to the present disclosure has been described above with reference to the shown embodiment, the present disclosure is not limited thereto. In addition, each portion of the robot can be replaced with any structure that can exhibit the same function. In addition, any structure may be added to the robot.

## Claims

1. A robot comprising:
a base having a housing;
a first arm provided below the base and configured to rotate about a first axis with respect to the base;
a second arm provided below the first arm and configured to rotate about a second axis parallel to the first axis with respect to the first arm;
a shaft provided at a tip end portion of the second arm and configured to move upward and downward along a third axis parallel to the second axis;
a first motor provided in the housing and configured to generate power for rotating the first arm with respect to the base;
a speed reducer provided in the housing, configured to reduce a rotational speed of the first motor, and configured to transmit the power to the first arm;
a second motor configured to generate power for rotating the second arm with respect to the first arm; and
a third motor configured to generate power for moving the shaft upward and downward, wherein
the housing includes a bottom plate portion provided with a first through hole extending along the first axis,
part of the speed reducer is disposed in the first through hole, and
the first arm includes a first arm base that extends in a direction orthogonal to the first axis, and an accommodating portion that protrudes downward from the first arm base, accommodates the second motor, and is spaced apart from the second arm.

2. The robot according to claim 1, wherein
the speed reducer includes an input shaft that is disposed along the first axis and rotates about the first axis by the power of the first motor, and an output shaft that is disposed coaxially with the input shaft and outputs rotation at a reduced rotational speed, and
the output shaft is disposed in the first through hole.

3. The robot according to claim 2, wherein
an upper end portion of the input shaft is positioned above the bottom plate portion, and
the input shaft passes through the first through hole.

4. The robot according to claim 3, wherein
a lower end portion of the input shaft is positioned below the bottom plate portion, and
the robot further comprises:
a first bearing configured to rotatably support the input shaft and positioned above the bottom plate portion; and
a second bearing configured to rotatably support the input shaft and positioned below the bottom plate portion.

5. The robot according to claim 4, wherein
the speed reducer further includes an intermediate portion that is positioned between the input shaft and the output shaft and transmits rotation of the input shaft to the output shaft,
an upper end portion of the intermediate portion is positioned above the bottom plate portion, and
a contact portion between the intermediate portion and the output shaft is positioned in the first through hole.

6. The robot according to claim 5, wherein
a contact portion between the input shaft and the intermediate portion is positioned in the first through hole.

7. The robot according to claim 4, further comprising
a support member configured to couple the output shaft and the first arm while supporting the second bearing.

8. The robot according to claim 7, wherein
the first arm base is provided with a second through hole at a position facing the speed reducer, and
the support member includes a first portion that is in contact with an upper surface of the first arm base, and a second portion that protrudes downward from the first portion and is disposed in the second through hole.

9. The robot according to claim 1, wherein
the speed reducer includes a fixed portion fixed to the housing, and
a recessed portion in which the fixed portion is disposed is provided on an outer peripheral portion of the first through hole on an upper surface of the bottom plate portion.

10. The robot according to claim 1, wherein
the second arm includes a second arm base which extends in a direction orthogonal to the second axis and on which the third motor is installed, and a cover which is detachably attached to the second arm base, and
a maximum length of the cover in a direction along the second axis is larger than a maximum length of the accommodating portion in the direction along the second axis.

11. The robot according to claim 10, wherein
a connector is provided on an upper surface of the cover, and
when viewed from a direction parallel to the second axis, the accommodating portion is positioned inside a rotation trajectory of the connector when the second arm is rotated.

12. The robot according to claim 10, wherein
a cross-sectional shape orthogonal to a longitudinal direction of the first arm base is same as a cross-sectional shape orthogonal to a longitudinal direction of the second arm base.

13. The robot according to claim 2, wherein
the input shaft has a tubular shape, and
the robot further comprises:
a first pulley coupled to an output shaft of the first motor;
a second pulley in which the input shaft of the speed reducer is disposed and which is provided with a screw hole extending in a radial direction;
an endless belt wound around the first pulley and the second pulley; and
a set screw disposed in the screw hole and pressed against the input shaft of the speed reducer.

14. The robot according to claim 1, wherein
the base is fixed to a support positioned above the first arm, and
when a maximum stroke length by which the shaft is movable upward and downward is defined as S, and a distance between a lower end of the shaft and the support in a state in which the shaft is at an uppermost position is defined as H,
H ≤ 3S is satisfied.
